## Europäisches Patentamt
## European Patent Office
## Office européen des brevets

(19)

(11) Veröffentlichungsnummer: **0 061 808**
**A2**

(12) # EUROPÄISCHE PATENTANMELDUNG

(21) Anmeldenummer: **82200337.2**

(22) Anmeldetag: **17.03.82**

(51) Int. Cl.³: **G 01 N 23/04**
**G 01 B 15/00**

(30) Priorität: **31.03.81 DE 3112758**

(43) Veröffentlichungstag der Anmeldung:
**06.10.82 Patentblatt 82/40**

(84) Benannte Vertragsstaaten:
**CH DE FR GB LI NL SE**

(71) Anmelder: **Philips Patentverwaltung GmbH**
**Steindamm 94**
**D-2000 Hamburg 1(DE)**

(84) Benannte Vertragsstaaten:
**DE**

(71) Anmelder: **N.V. Philips' Gloeilampenfabrieken**
**Groenewoudseweg 1**
**NL-5621 BA Eindhoven(NL)**

(84) Benannte Vertragsstaaten:
**CH FR GB LI NL SE**

(72) Erfinder: **Kowalski, Günter**
**Fasanenweg 8a**
**D-2080 Pinneberg(DE)**

(74) Vertreter: **Hartmann, Heinrich, Dipl.-Ing. et al,**
**Philips Patentverwaltung GmbH Steindamm 94**
**D-2000 Hamburg 1(DE)**

(54) **Vorrichtung zur Prüfung von Körpern mit periodischen Strukturen.**

(57) Die Erfindung betrifft eine Vorrichtung zur Prüfung eines periodische Strukturen enthaltenden Körpers, welche eine elektronische Bildaufnahmeeinrichtung zur Erfassung der periodischen Strukturen und eine weitere elektronische Einrichtung besitzt, die jeweils aus den in Richtung der periodischen Körperstrukturen liegenden Meßwerten das Spektrum bildet, in dem jeweiligen Spektrum die periodischen (B1, B2) und, falls erforderlich, die Gleichanteile (G) unterdrückt und die so veränderten Spektren rücktransformiert sowie einer Bildauswerteeinheit (13, 18) zuführt.

./...

Croydon Printing Company Ltd.

Fig.1

"Vorrichtung zur Prüfung von Körpern
mit periodischen Strukturen"

Die Erfindung betrifft eine Vorrichtung zur Prüfung eines
periodische Strukturen enthaltenden Körpers, die eine
elektronische Meßwerte liefernde Bildaufnahmeeinrichtung
zur Aufnahme des Körpers sowie eine elektronische Einrichtung zur Verarbeitung der Meßwerte bzw. Darstellung
eines Körperbildes besitzt.

Derartige Vorrichtungen sind allgemein bekannt. Sie dienen
u.a. zur Untersuchung von Körpern auf Strukturfehler. In
der zerstörungsfreien Werkstoffprüfung werden solche Vorrichtungen eingesetzt, um beispielsweise Gaseinschlüsse
in Gußteilen oder andere die mechanische Festigkeit von
Werkstücken beeinträchtigende Strukturfehler zu ermitteln.

Die Körper werden dazu entweder durchstrahlt, z.B. mittels
Röntgen- oder Ultraschallstrahlen o.dgl., oder ihre Oberflächen werden mit elektromechanischen Hilfsmitteln abgetastet. Auf diese Weise wird ein die Fehler enthaltendes
Bild des Körpers angefertigt, das von einem Kontrolleur
oder einer automatischen Bilderkennungseinheit zur Erkennung der Fehler beobachtet wird.

Die zu beobachtenden Bilder der Körper sind jedoch relativ
unübersichtlich, so daß es schwierig ist, die fehlerhaften
Strukturen zu erkennen. Dies gilt umso mehr, als bei Körpern
bzw. Werkstücken, die periodische Körperstrukturen aufweisen,
die Übersichtlichkeit durch die periodischen Körperstrukturen
zusätzlich vermindert wird.

Aufgabe der Erfindung ist es daher, eine Vorrichtung zu schaffen, mit der die Erkennbarkeit von Fehlern in Körpern
mit periodischer Struktur verbessert wird.

Diese Aufgabe wird gemäß der Erfindung dadurch gelöst, daß
die Bildaufnahmeeinrichtung derart angeordnet ist, daß sie
die periodische Struktur des Körpers erfaßt, und daß die
elektronische Einrichtung so ausgebildet ist, daß sie jeweils
aus den in Richtung der periodischen Körperstruktur liegenden
Meßwerten das Spektrum bildet, in dem jeweiligen Spektrum
die periodischen und, falls erforderlich, die Gleichanteile
unterdrückt und die so veränderten Spektren rücktransformiert
sowie einer Bildauswerteeinheit zuführt.

Wird der zu untersuchende Körper beispielsweise so durchstrahlt bzw. sein Bild so in einer Speichermatrix gespeichert,
daß die Körperperiodizitäten in Richtung der
Zeilen der Matrix zu liegen kommen, so bilden die entlang
jeweils einer Speicherzeile liegenden Meß- bzw. Bildwerte
ein Bildsignal.

Von dem jeweils einer Speicherzeile zugeordneten Bildsignal, das z.B. eine periodische oder nicht-periodische
Funktion der Körperabsorption o.dgl. darstellt, wird dann
das Spektrum mittels einer Fouriertransformation erzeugt.
Nach Unterdrückung der periodische bzw. monotone Körperstrukturen darstellenden Anteile im Spektrum erfolgt, ebenfalls zeilenweise, eine Rücktransformation der so korrigierten
Spektren.
Selbstverständlich kann die Fouriertransformation auch in
einer anderen als der Zeilenrichtung oder aber auch zweidimensional vorgenommen werden. Dies ist vorteilhaft, wenn
der Körper z.B. in senkrecht zueinander liegenden Richtungen
periodische Strukturen aufweist.

Mittels der Vorrichtung nach der Erfindung ist es somit möglich, den Informationsinhalt des Bildes eines periodischen Körpers erheblich zu reduzieren. Im Körperbild bleiben lediglich die Material- bzw. Fertigungsfehler oder andere nicht-periodische Details des Körpers übrig. Das Körperbild kann dann von einem menschlichen Beobachter zur jetzt wesentlich erleichterten Fehlerbeurteilung, z.B. auf einem Monitor, betrachtet oder einer automatischen Bilderkennungs- bzw. Auswerteeinheit zugeführt werden, die bei Vorhandensein einer Fehlerstruktur oder einer zu großen Fehlerrate einen Alarm auslöst.

Zwei Beispiele einer möglichen Bildverarbeitung seien hier angegeben.

Das Werkstück sei z.B. eine sehr genau gefertigte Schnecke, von der ein ihre Periodizitäten enthaltendes Bild erzeugt wird, das in Richtung der Schneckenperiodizitäten fouriertransformiert wird. Eine anschließende Elimination der periodischen-sowie der Gleichanteile müßte das Abbild der Schnecke völlig verschwinden lassen, es sei denn, es liegt ein Fehler vor. Die Auswerteeinheit braucht hier nur die Bildpunkte zu zählen, die einen negativen Schwellwert unterschreiten (= fehlendes Material), und sie klassifiziert das Teil bei zu häufigem Auftreten solcher Bildpunkte als fehlerhaft. Ebenso können die einen positiven Schwellwert überschreitenden Bildpunkte detektiert werden (= überschüssiges Material an der Oberfläche), so daß der Prüfling ggf. für eine Nachbearbeitung vorzusehen ist.

Für andere Anwendungsfälle, bei denen die genaue Art und Lage des Fehlers durch einen menschlichen Beobachter beurteilt werden muß, kann beim Auftreten einer nicht-periodischen Struktur diese auf einem Farbmonitor in einer Signalfarbe wiedergegeben werden, so daß dadurch für einen Beobachter die Erkennbarkeit des Fehlers vergrößert wird.

Die Zeichnung stellt Ausführungsbeispiele der Erfindung dar.
Es zeigen:

Fig. 1      eine Vorrichtung nach der Erfindung mit
            einem fächerförmig  ausgeblendeten Röntgenstrahlenbündel und einem zu durchstrahlenden,
            periodischen Werkteil,

Fig. 2      ein die periodischen Strukturen des Werkteils
            enthaltendes Bild,

Fig. 3      das in Richtung der periodischen Strukturen
            fouriertransformierte Bild des Werkteils, und

Fig. 4      ein spezielles Bildsignal.

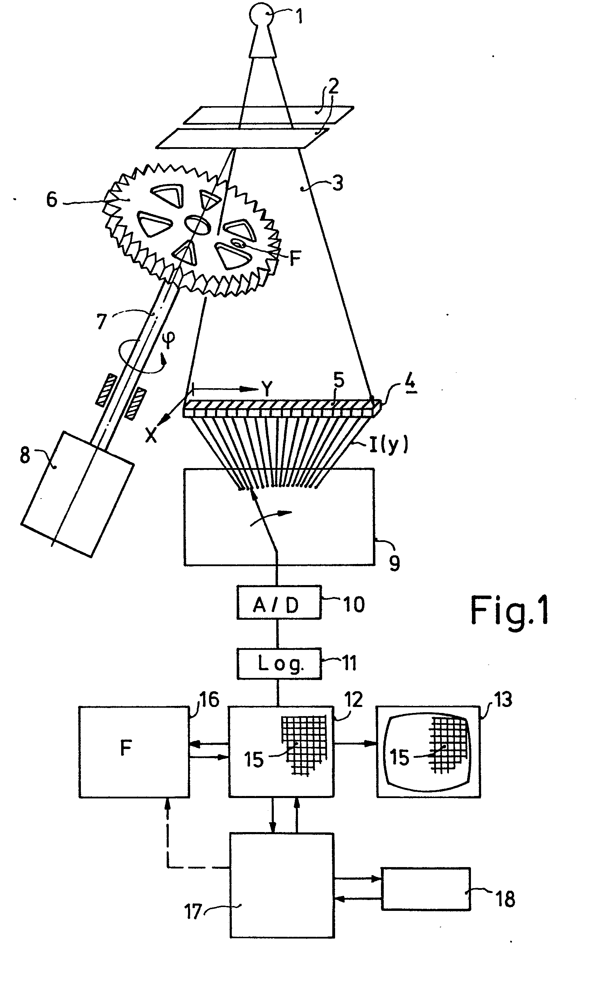

In der Fig. 1 ist eine Vorrichtung nach der Erfindung dargestellt, die beispielsweise eine Röntgenstrahlenquelle 1 besitzt, deren Röntgenstrahlen mittels einer Schlitzblende 2
zu einem ebenen, fächerförmigen Strahlenbündel 3 kollimiert
sind. Das Strahlenbündel 3 trifft auf eine in seiner Ebene
liegende Detektorzeile 4, die aus einer Vielzahl einzelner
Detektoren 5, z.B. 512 Detektoren, besteht, die an ihrem
Ausgang elektronische Meßsignale I(y) entsprechend der auf
sie auftreffenden Röntgenstrahlung liefern. Die Variable y
kennzeichnet dabei den Ort eines Detektors 5 auf der
Koordinatenachse Y, die parallel zur Detektorzeile 4
verläuft. Die Strahlenquelle 1, die Schlitzblende 2 und
die Detektorzeile 4 bilden die bereits erwähnte Bildaufnahmeeinrichtung.

Als zu untersuchendes Werkteil ist z.B. ein Zahnrad 6 gezeigt,
das, auf einer Welle 7 montiert, mittels einer Antriebsvorrichtung 8 im Strahlenbündel 3 gedreht wird. Das Strahlenbündel 3 durchstrahlt dabei das Zahnrad 6 in radialer
Richtung, so daß bei Drehung des Zahnrades 6 um den Winkel
$\varphi$, z.B. um $\varphi = 360^\circ$, eine vollständige Abwicklung A erhalten
wird, wenn gleichzeitig die bei jedem Winkel $\varphi$ mittels der

Detektorzeile 4 gemessenen Meßwerte bzw. die daraus erhaltenen Bildwerte in Richtung der Koordinatenachse X, die
senkrecht zur Y-Achse verläuft, versetzt abgespeichert werden.

Diese Abwicklung A kann, nachdem die Meßwert I(y) über einen
Multiplexer 9 einem Analog-Digital-Wandler 10 und anschließend ggf. einem Logarithmierglied 11 zur Erzeugung
von die Schwächung der Röntgenstrahlen darstellenden Bildwerten zugeleitet wurden, in einem Speicher 12, z.B. einem
Matrixspeicher, gespeichert und auf einem Monitor 13 sichtbar gemacht werden.

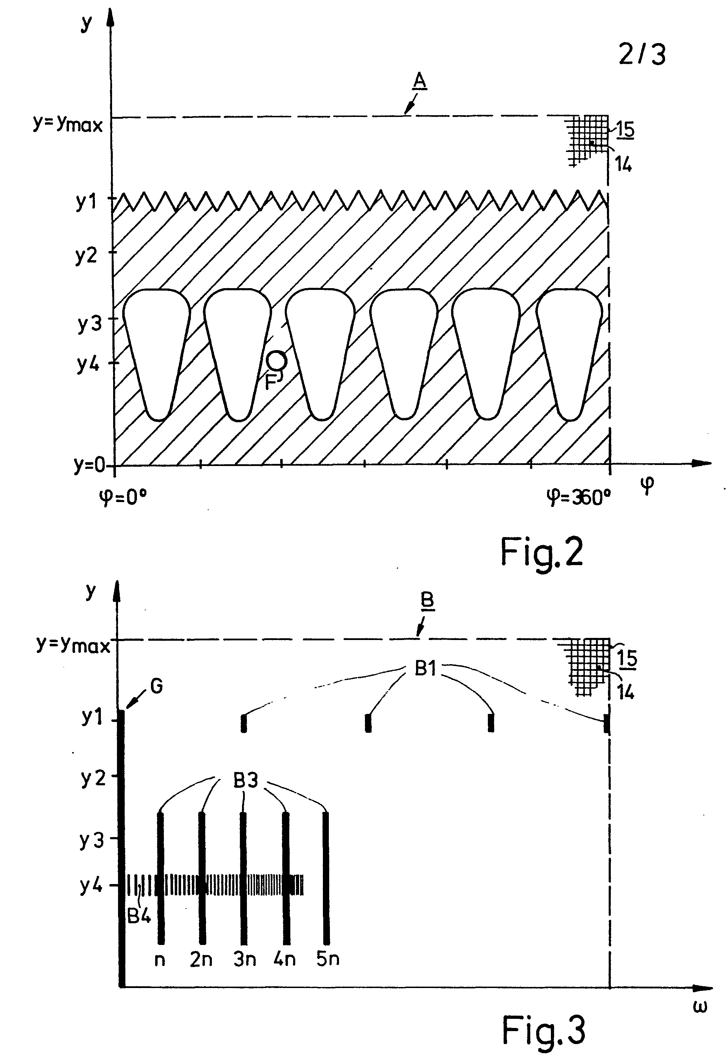

Die Fig. 2 zeigt die Abwicklung A des Zahnrades 6 in einer
aus einzelnen zeilen- und spaltenweise angeordneten Speicherelementen 14 bestehenden Speichermatrix 15. Auf der Abzisse
sind die Koordinatenrichtung X bzw. der Drehwinkel $\varphi$ und auf
der Ordinate die Koordinatenrichtung Y aufgetragen. Die
Abwicklung A stellt ein Bild dar, in dem die periodischen
Strukturen des Zahnrades 6 vorhanden sind, die sich in
Richtung der Matrixzeilen erstrecken. Dabei liegen im
Bereich um den Wert y1 und jeweils in Zeilenrichtung verlaufend die periodischen Zahnstrukturen des Zahnrades 6,
während im Bereich y3 seine periodische Speichenstruktur
sichtbar ist. Im Bereich y2 besitzt das Bild A eine monotone
Struktur, d.h. die Bildwerte ändern sich in Zeilen-(X)-
Richtung praktisch nicht.

Ein in einer Speiche des in Fig. 1 gezeigten Zahnrades 6
liegender Fehler F, z.B. ein die Festigkeit des Zahnrades
6 vermindernder Gaseinschluß (Lunker), erscheint ebenfalls
in der Abwicklung A, und zwar im Bereich y4. In diesem Gebiet
stellt die Abwicklung A, in Zeilenrichtung gesehen, sowohl
periodische als auch nicht-periodische Strukturen dar. Die
sich aus den Meß- bzw. Bildwerten der jeweils in Zeilenrichtung X liegenden Speicherelemente 14 ergebenden Bildsignale sind daher im Bereich y1 und y3 periodisch und im Bereich y2 monoton. Im Bereich y4 bestehen die Bildsignale dagegen aus periodischen und nicht-periodischen Bildsignalteilen.

Werden nun die Bildsignale Zeile für Zeile, also für jeweils konstantes y, fouriertransformiert, wozu, wie in Fig. 1 dargestellt, ein Fouriertransformationsglied 16 vorgesehen ist, das mit dem Speicher 12 verbunden ist und unter Steuerung eines ebenfalls mit dem Speicher 12 verbundenen Rechners 17 arbeitet, so ergibt sich das in der Fig. 3 dargestellte fouriertransformierte, aus (Amplituden-)Spektren der Bildsignale bestehende Körperbild B. Die Amplituden der einzelnen Spektralanteile der jeweiligen Bildsignale werden dabei durch unterschiedliche Grauwerte (Bildwerte) repräsentiert. Das Bild B (bzw. Datenfeld) weist neben den jeweiligen Gleichanteilen G in Bereichen mit periodischen Strukturen y1 und y3 zusätzlich ein typisches, praktisch diskretes Bandenspektrum B1, B3 auf.

Die frequenzmäßige Lage dieser Banden B1, B3 wird dabei u.a. durch die Periodenzahl n in dem jeweiligen Bereich y1 bzw. y3, multipliziert mit einer ganzen Zahl N = 1, 2, 3 etc., bestimmt, d.h. von dem Produkt n·N. Beispielsweise weist ein Bildsignal im Speichenbereich bei einer einmaligen Abtastung des Zahnrades n = 6 Perioden auf, während im Bereich des Zahnkranzes (Bereich y1) die Periodenzahl n erheblich größer ist.

Weiterhin besitzt das Bild B im Bereich y4 ein praktisch kontinuierliches Spektrum B4, das den nicht-periodischen Fehler F darstellt und dem diskreten Spektrum B3 überlagert ist.

Um nun die Erkennbarkeit des Fehlers F in dem in Fig. 2 dargestellten Bild A zu erhöhen, werden im fouriertransformierten Bild B alle Gleichanteile G (Signalanteile mit der Frequenz $\omega$ = o) und die Banden B1 und B3 unterdrückt.

Ist die Periodenzahl n bekannt, im Speichenbereich y3 ist n = 6 (vgl. Fig. 1), und sind ebenso die periodischen bzw. monotonen Körperbereiche vorgegeben, z.B. wie es bei völlig bekannten Werkteilen der Fall sein kann, so lassen sich die frequenzmäßigen Positionen sowie die räumlichen Ausdehnungen der Banden B1 bzw. B3 in y-Richtung im Bild B mittels des Rechners 17 unmittelbar bestimmen. Die Banden B1, B3 werden dann, indem die Bildwerte an den entsprechenden Bildelementen 14 z.B. den Bildwerten der Umgebung angepaßt werden, unter Berücksichtigung ihrer (Frequenz-)Breite unterdrückt. Hierbei ist darauf zu achten, daß bei Übergängen zwischen Bereichen periodischer Struktur und Bereichen monotoner bzw. nichtperiodischer Struktur die Unterdrückung des Bandenspektrums mit langsam abnehmender Wichtung und nicht abrupt erfolgt, um fließende Übergänge zu erhalten.

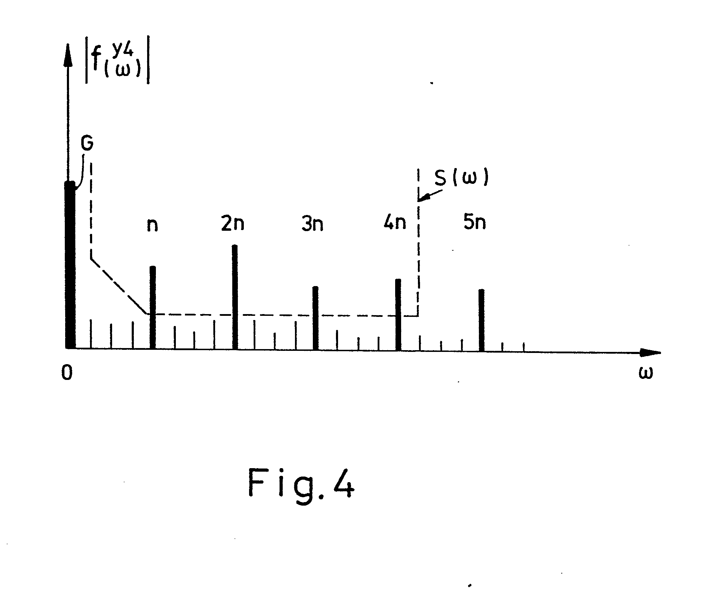

Die Positionen der Banden B1 bzw. B3 sowie die monotonen Körperbereiche lassen sich aber auch anhand des fouriertransformierten Bildes 3 sowie unter Zuhilfenahme des Rechners 17 ermitteln. Im allgemeinen wird es hierzu genügen, mit einem einfachen Schwellwert S($\omega$) das Fourierspektrum abzusuchen. Dazu werden die absoluten Fourierkomponenten f für jeweils ein spezielles y (z.B. y4) herangezogen, wie Fig. 4 zeigt, in der die Fourierkomponenten $\left| f\left(\frac{y4}{\omega}\right) \right|$ als Funktion der Frequenz im Bereich y4 (vgl. Fig. 3) beispielsweise aufgetragen sind.

Bei geeigneter, ggf. frequenzabhängiger Wahl des Schwellwertes S($\omega$) überschreitet das Spektrum bei der Periode n bzw. beim zugeordneten Frequenzwert $\omega$n zum ersten Mal diesen Schwellwert. Ist diese Periode n ermittelt, so werden alle Frequenzkomponenten der Harmonischen 2n, 3n etc., auch zu null gesetzt, denn die Periodizität ist im allgemeinen nicht sinusförmig. Der Vorgang kann wiederholt werden, falls das Muster aus mehreren Periodizitäten zusammengesetzt ist. Überschreitet keine Komponente n $\geq$ 1 den Schwellwert, so ist das Werkstück monoton. Der Schwellwert kann z.B. empirisch ermittelt werden. Er kann aber auch proportional zur Gesamt-energie des Signals $E = \sqrt{\sum_n |f^2|}$ gewählt werden, um sich z.B. unterschiedlichen Bildzonen anzupassen.

Sind die Gleichanteile G und die Banden B1 bzw. B2 unterdrückt, so wird das Bild B dem Fourierprozessor 16 zugeführt und zeilenweise rücktransformiert. Das nunmehr entstandene, z.B. auf dem Monitor 13 sichtbar gemachte Körperbild A' (nicht dargestellt) enthält wenig Dynamik, da in ihm die periodischen und monotonen Körperstrukturen praktisch nicht mehr vorhanden sind. Ein Beobachter bzw. eine automatische Bilderkennungseinheit 18, die z.B. mit dem Speicher 12 verbunden ist, kann somit wesentlich leichter evtl. vorhandene Materialfehler auffinden.

Die in Fig. 1 gezeigte Bildaufnahmeeinrichtung eignet sich natürlich auch zur Prüfung anderer periodischer Werkteile. Beispielsweise kann ein Schattenbild einer Schneckenspindel (nicht dargestellt), in welchem die periodischen Schneckenspindel-Strukturen vorhanden sind, erzeugt werden, indem die Schneckenspindel in Richtung ihrer Längsachse und senkrecht zur Ebene des Fächers 3 durch diesen hindurch bewegt wird. Die Schneckenspindel kann dabei z.B. auf einem Fließband liegen.

Die Bildaufnahmeeinrichtung kann aber auch ein räumlich-divergentes Röntgenstrahlenbündel besitzen, das auf ein zweidimensionales, ortsauflösendes Detektorarray auftrifft. Mit einer derartigen Bildaufnahmeeinrichtung können Werkteile vollständig und in kürzerer Zeit durchstrahlt werden.

Ebenso ist es möglich, die Bildaufnahmeeinrichtung als Ultraschallwandler-Vorrichtung auszubilden, so daß mit Hilfe von Schallwellen ein Bild eines Körpers erzeugbar ist, in dem seine periodischen Strukturen vorhanden sind.

Soll lediglich die periodische Oberfläche eines Körpers auf Einbrüche bzw. Kerben untersucht werden, so kann auch ein elektromechanisches System eingesetzt werden, das nur die Oberfläche abtastet und auf diese Weise ein die Körper- periodizität enthaltendes Körperbild erzeugt.

PATENTANSPRÜCHE:

1.         Vorrichtung zur Prüfung eines periodische Strukturen enthaltenden Körpers, die eine elektronische Meßwerte liefernde Bildaufnahmeeinrichtung zur Aufnahme des Körpers sowie eine elektronische Einrichtung zur Verarbeitung der Meßwerte bzw. Darstellung eines Körperbildes besitzt,

dadurch gekennzeichnet, daß die Bildaufnahmeeinrichtung (1-4) derart angeordnet ist, daß sie die periodische Struktur des Körpers erfaßt, und daß die elektronische Einrichtung (12, 16, 17) so ausgebildet ist, daß sie jeweils aus den in Richtung der periodischen Körperstruktur liegenden Meßwerten das Spektrum bildet, in dem jeweiligen Spektrum die periodischen (B1, B2) und, falls erforderlich, die Gleichanteile (G) unterdrückt und die so veränderten Spektren rücktransformiert sowie einer Bildauswerteeinheit (13, 18) zuführt.

2.         Vorrichtung nach Anspruch 1, dadurch gekennzeichnet, daß die elektronische Einrichtung (12, 16, 17) mit einer automatischen Bilderkennungseinheit (18) verbunden ist.

3.         Vorrichtung nach Anspruch 1 oder 2, dadurch gekennzeichnet, daß die Bildaufnahmeeinrichtung eine Röntgenstrahlenquelle (1) und einen ortsempfindlichen Röntgendetektor (4) besitzt.

4.         Vorrichtung nach Anspruch 1 oder 2, dadurch gekennzeichnet, daß das von der Röntgenstrahlenquelle (1) ausgehende Röntgenstrahlenbündel (3) zu einem ebenen Fächer ausgeblendet ist und der Röntgendetektor (4) aus einer Detektorzeile besteht.

5.          Vorrichtung nach Anspruch 1 oder 2, <u>dadurch</u> <u>gekennzeichnet</u>, daß die Bildaufnahmeeinrichtung eine Ultraschallwandler-Einrichtung ist.

6.          Vorrichtung nach Anspruch 1 oder 2, <u>dadurch</u> <u>gekennzeichnet</u>, daß die Bildaufnahmeeinrichtung eine elektromechanische Einrichtung zur Abtastung der Körperoberfläche ist.

Fig.1

0061808

2/3

Fig.2

Fig.3

Fig.4